# FASCICULE DE BREVET EUROPEEN

(11) **EP 3 273 445 B1**
(45) Date de publication et mention de la délivrance du brevet: **20.06.2018**
(21) Numéro de dépôt: 17177860.8
(22) Date de dépôt: 26.06.2017
(51) Int. Cl.: G21C 19/10, G21C 17/06

(54) **DISPOSITIF D'INTERVENTION POUR ASSEMBLAGE COMBUSTIBLE NUCLEAIRE**
VORRICHTUNG ZUM OPERIEREN MIT KERNBRENNSTOFFELEMENTEN
INTERVENTION DEVICE FOR NUCLEAR FUEL ASSEMBLY

(30) Priorité: 20.07.2016 FR 1656897
(43) Date de publication de la demande: 24.01.2018
(73) Titulaire: REEL, 69450 Saint-Cyr-au-Mont-d'Or (FR)
(72) Inventeur: CASTAING, Jean-Louis, 44600 SAINT NAZAIRE (FR); KOPECKY, Bernard, 44300 NANTES (FR)
(74) Mandataire: Cabinet Laurent & Charras

(56) Documents cités:
- FR-A1- 2 730 339
- US-A- 4 036 686
- US-A- 5 361 280
- US-A- 5 737 377
- US-A1- 2003 138 071

## Description

### DOMAINE DE L'INVENTION

La présente invention se rapporte au secteur technique de l'industrie nucléaire, et concerne les dispositifs d'intervention pour les assemblages de combustibles nucléaires.

L'invention trouve, plus particulièrement, son application dans la manutention et l'inspection des assemblages combustible nucléaire.

### ETAT ANTERIEUR DE LA TECHNIQUE

De manière générale, les assemblages combustible nucléaire sont constitués de crayons, comportant un empilement de pastilles frittées du combustible proprement dit, ces crayons étant assemblés entre eux au moyen de grilles - entretoises, réparties selon la hauteur de l'assemblage. Ces assemblages présentent traditionnellement une section transversale de forme carrée.

Dans le domaine des réacteurs nucléaires, il convient de procéder à des inspections périodiques d'un certain nombre d'assemblages combustible nucléaire.

Après une certaine période d'irradiation, on observe que lesdits assemblages présentent différents types de déformation, tels que notamment des vrillages, des déformations en arc de cercle, ou « *banane* », des flambages, ces déformations tendant à augmenter fortement avec la durée ou le degré d'irradiation.

D'autres défauts peuvent apparaitre, tels que le percement des crayons les rendant non-étanches, la déformation ou arrachages de morceaux de grilles provoqués par les frictions des combustibles entre eux lors des manutentions dans la cuve...

Il est donc souhaité de pouvoir inspecter lesdits assemblages régulièrement afin de mesurer ces déformations, déceler les crayons non étanches, vérifier l'état des grille...

L'inspection vise à déterminer le diamètre des crayons sur toute leur hauteur, la largeur et la forme des grilles, la distance entre les crayons pour différentes hauteurs, la déformation longitudinale de l'assemblage, le déport pied/tête d'assemblage lorsque celui-ci est simplement posé sur son pied, la présence d'eau dans les crayons... L'inspection nécessite donc la mise en oeuvre de plusieurs outils de mesure différents, et l'accès aux quatre faces de l'assemblage de combustibles et sur toute sa hauteur.
Traditionnellement, l'immersion des combustibles neufs s'effectue depuis le niveau supérieur d'une piscine, au moyen d'une nacelle susceptible de se déplacer verticalement au-dessus de la piscine. La nacelle est configurée pour supporter ledit assemblage et déplacer ledit assemblage sur toute la hauteur de la piscine.
Les inspections sont classiquement effectuées en utilisant la nacelle pour déplacer les outils d'inspections, le combustible étant suspendu au pont passerelle:
Par exemple, les inspections peuvent être effectuées à un niveau supérieur de la piscine en équipant une partie supérieure de cette dernière d'un ensemble d'outils de visualisation et en déplaçant ledit assemblage au droit des outils de visualisation.
Une autre méthode d'inspection consiste à disposer au fond de la piscine, un stand d'inspection comportant un ensemble d'outils de visualisation, l'assemblage étant placé dans le stand d'inspection à l'aide du pont passerelle. Des exemples typiques de tels appareils d'inspection sont décrits dans les documents US 5.737.377 et US 4.036.686.

Ces deux modes d'inspection imposent de nombreuses manutentions d'outils et d'assemblages à inspecter. Par ailleurs le stand nécessite de disposer de place en fond de piscine.
En outre, les nouvelles centrales nucléaires, par exemple mettant en oeuvre la technologie EPR pour « réacteur pressurisé européen », intègrent des piscines, dans lesquelles l'espace disponible est réduit.
Il s'ensuit que l'intégration d'un stand d'inspection est plus difficile.
Une solution alternative consiste à équiper la nacelle d'un descenseur avec un ensemble d'outils de visualisation montés sur l'un des côtés de la nacelle. La nacelle roule sur des rails dont est équipé le descenseur. Ces outils sont mobiles en translation le long de la nacelle de sorte à visualiser un côté de l'assemblage sur toute sa longueur.

Cependant, ce mode d'inspection ne permet pas de visualiser l'intégralité des paramètres dudit assemblage si le panier standard du descenseur est utilisé. En outre, lorsqu'un changement d'outil est requis, il est nécessaire d'extraire le combustible de la nacelle pour pouvoir la remonter à la surface et effectuer le changement de l'outil. En effet, un combustible irradié ne peut pas être remonté jusqu'à la surface de la piscine car son rayonnement est trop important.

Le problème technique que l'invention vise à résoudre consiste donc à obtenir un dispositif d'intervention sur un assemblage combustible nucléaire capable d'occuper le minimum de place dans la piscine, d'assurer le déplacement et l'inspection sur place dudit assemblage, et dans lequel les mesures dudit assemblage sont les plus complètes possible avec la possibilité de changer les outils d'inspection sans avoir à déplacement le combustible.

Par ailleurs l'équipement doit permettre le supportage de l'assemblage de combustible de façon sûre dans toutes ses configurations, même en cas de séisme. Ceci doit tout particulièrement être respecté lorsque le combustible est posé sur son pied sans être directement retenu en tête.

### EXPOSE DE L'INVENTION

L'invention vise à résoudre ce problème technique en proposant un dispositif d'intervention comportant un descenseur configuré pour supporter un assemblage combustible, et un support d'outil indépendant dudit descenseur et configuré pour transporter une pluralité d'outils au niveau dudit assemblage.

A cet effet, l'invention concerne un dispositif d'intervention sur un assemblage combustible nucléaire, ledit dispositif comportant :
- une nacelle configurée pour maintenir et déplacer un assemblage combustible nucléaire sur toute la hauteur d'une piscine d'un réacteur nucléaire, et
- au moins un outil configuré pour mesurer un paramètre dudit assemblage combustible nucléaire maintenu par ladite nacelle, ledit outil étant monté dans un porte outil configuré pour maintenir et déplacer au moins un outil sur toute la hauteur de la piscine d'un réacteur nucléaire indépendamment de ladite nacelle.

Selon l'invention, la nacelle comporte un bras de support disposé dans une partie supérieure de ladite nacelle, et un plateau formant une extrémité inférieure de ladite nacelle, cette dernière étant configurée pour maintenir un assemblage combustible nucléaire en appui sur ledit plateau et entourée par une ouverture dudit bras de support.

L'invention permet ainsi d'utiliser un grand nombre d'outils interchangeables, montés alternativement sur le porte outil, alors même qu'un assemblage combustible nucléaire est maintenu en position sur la nacelle. L'invention permet d'inspecter librement une partie d'un assemblage combustible nucléaire situé entre le bras de support et le plateau ainsi qu'une extrémité supérieure dudit assemblage.

Il s'ensuit que l'invention permet d'améliorer les mesures effectuées sur l'assemblage sans augmenter l'encombrement des outils et sans déplacer l'assemblage dans une zone dédiée à l'inspection.

Selon un mode de réalisation, le dispositif d'intervention comporte une alvéole pénétrant dans l'ouverture dudit bras de support, et configurée pour recevoir un assemblage combustible nucléaire avec ledit bras de support lors d'un déplacement de l'assemblage par la nacelle. Dans ce mode de réalisation, l'assemblage est sécurisé par la présence de l'alvéole qui soutient latéralement l'assemblage entre le bras et le plateau. L'alvéole permet de guider l'assemblage lors de son chargement dans la nacelle et de supporter les charges latérales en cas de séisme dans les phases de descente ou de remontée de l'assemblage.

Selon un mode de réalisation, le dispositif d'intervention comporte un espacement entre l'ouverture du bras de support et un assemblage combustible nucléaire. Ce mode de réalisation permet à l'assemblage de se déformer longitudinalement et latéralement sans buter contre l'ouverture, de sorte à mesurer un défaut de verticalité de l'assemblage. En cas de séisme, la tête de l'assemblage viendra buter contre le bras support et le retiendra pour éviter que le combustible s'extraie de la nacelle et tombe au fond de la piscine.

Selon un mode de réalisation, le dispositif d'intervention comporte un support de tête pénétrant dans l'ouverture du bras de support, et configuré pour monter un assemblage combustible nucléaire libre en rotation par rapport audit bras de support. Ce mode de réalisation permet d'effectuer une rotation de l'assemblage afin d'inspecter les quatre faces de l'assemblage sans déplacer les outils.

Selon un mode de réalisation, le dispositif d'intervention comporte un support de pied mobile en rotation par rapport au plateau. Ce mode de réalisation permet également d'effectuer une rotation de l'assemblage afin d'inspecter les quatre faces de l'assemblage sans déplacer les outils.

Selon un mode de réalisation, le bras de support et le plateau sont configurés pour établir une distance supérieure à 15 centimètres entre le corps longitudinal de la nacelle et un assemblage combustible nucléaire monté dans ladite nacelle. Ce mode de réalisation permet de limiter le risque de contact entre le corps de la nacelle et l'assemblage en cas de séisme.

Selon un mode de réalisation, le porte outil comporte un chariot destiné à supporter l'outil et monté sur une table, ledit chariot étant configuré pour se déplacer selon deux directions orthonormées sur une surface de ladite table. Ce mode de réalisation permet de déplacer l'outil au plus près de l'assemblage.

Selon un mode de réalisation, le chariot comporte des moyens de détection d'une résistance de déplacement dudit chariot configurés pour détecter si un effort résistant dépasse un seuil prédéterminé. Ce mode de réalisation permet de stopper les déplacements du chariot lorsque l'effort résistant est trop important, afin de limiter le risque d'enfoncement des crayons de l'assemblage par ledit outil.

Selon un mode de réalisation, la nacelle est montée sur un premier guide et le porte outil est monté sur une second guide.

### BREVE DESCRIPTION DES DESSINS

La manière dont l'invention peut être réalisée et les avantages qui en découlent ressortiront mieux des exemples de réalisation qui suivent, donnés à titre indicatif et non limitatif à l'appui des figures annexées.
La figure 1 est une représentation schématique de face d'un dispositif d'intervention selon un mode de réalisation de l'invention.
Les figures 2a et 2b sont des représentations schématiques de côté et de dessus d'une nacelle du dispositif d'intervention de la figure 1, dans une configuration de déplacement d'un assemblage combustible nucléaire.
Les figures 3a et 3b sont des représentations schématiques de côté et de dessus d'une nacelle du dispositif d'intervention de la figure 1, dans une configuration de mesure d'une première déformation d'un assemblage combustible nucléaire.
Les figures 4a et 4b sont des représentations schématiques de côté et de dessus d'une nacelle du dispositif d'intervention de la figure 1, dans une configuration de mesure d'une seconde déformation d'un assemblage combustible nucléaire.
La figure 5 est une représentation schématique de côté d'un porte outil du dispositif d'intervention de la figure 1.

### DESCRIPTION DETAILLEE DE L'INVENTION

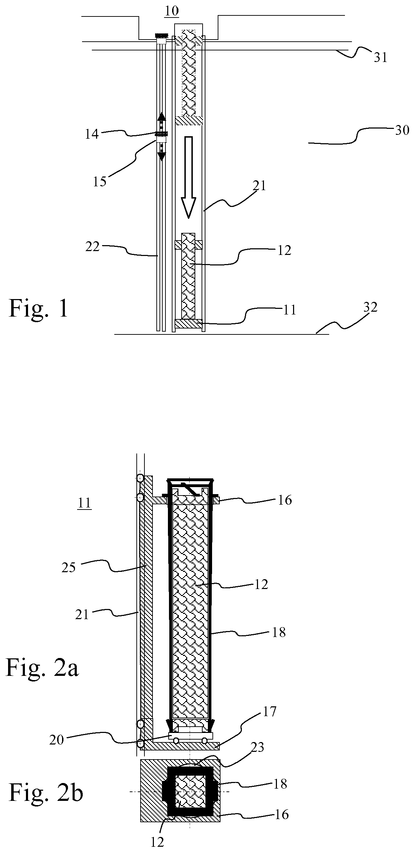

La figure 1 illustre un dispositif d'intervention **10** agissant dans une piscine **30** d'un réacteur nucléaire. Plus précisément, le dispositif d'intervention **10** comporte une nacelle **11** apte à déplacer un assemblage **12** combustible nucléaire depuis le dessus de la surface supérieure **31** de la piscine **30** jusqu'au fond **32** de la piscine **30.** Pour ce faire, la nacelle **11** est montée par des roues sur deux guides **21** s'étendant sur sensiblement toute la hauteur de la piscine **30**. La nacelle **11** comporte un corps **25** s'étendant longitudinalement par rapport aux guides **21** sur lequel les roues sont montées. Sous la commande d'une unité de commande, le corps de la nacelle **11** est déplacé en translation le long des guides **21**.

L'assemblage **12** combustible nucléaire est maintenu dans la nacelle **11** par l'intermédiaire d'un plateau **17** s'étendant perpendiculairement par rapport au corps **25,** et formant une extrémité inférieure de la nacelle **11**. L'assemblage **12** est posé sur le plateau **17** et maintenu axialement par un bras de support **16**. A cet effet, le bras de support **16** comporte une ouverture **23** destinée à entourer l'assemblage **12**. Le bras de support **16** s'étend, dans une partie supérieure de la nacelle **11,** perpendiculairement par rapport au corps **25**.

De préférence, le plateau **17** et l'ouverture **23** du bras de support **16** sont disposés de sorte à établir une distance supérieure à 15 centimètres entre l'assemblage **12** et le corps **25** de la nacelle **11**.

Tel qu'illustré sur les figures 2a et 2b, pour réaliser une descente ou une remontée d'un assemblage **12**, la nacelle **11** est équipée d'une alvéole **18** pénétrant par l'ouverture **23,** et configurée pour fixer l'assemblage **12** entre le plateau **17** et le bras de support **16**. La montée/descente de la nacelle est effectué par l'intermédiaire d'un treuil dédié positionné en bord de piscine. La nacelle étant en position basse, le combustible est mis en place dans la nacelle ou extrait ou moyen d'un outil de manutention du combustible accroché à un pont de manutention.

Le dispositif d'intervention **10** comporte également un porte outil **15** configuré pour maintenir et déplacer un ou plusieurs outils **14**. Les outils **14** utilisés peuvent être de nature très variée : outillage de mesure de la largeur des grilles d'assemblages combustible, outillage de mesure du diamètre des crayons, outillage de vérification de la présence d'eau dans les crayons, caméras... Ainsi, les outils **14** permettent de mesurer au moins un paramètre de l'assemblage **12** maintenu dans la nacelle **11.**

Le porte outil **15** est monté par des roues sur deux guides **22** s'étendant sur sensiblement toute la hauteur de la piscine **30.** Les guides **22** du porte outil **15** sont indépendants des guides **21** de la nacelle **11.** Ainsi, le porte outil **15** permet de changer d'outil **14** sans déplacer la nacelle **11** ni l'assemblage **12.**

En variante, les systèmes de déplacement du porte outil **15** et de la nacelle **11** peuvent varier sans changer l'invention pour peu qu'ils soient indépendant l'un de l'autre.

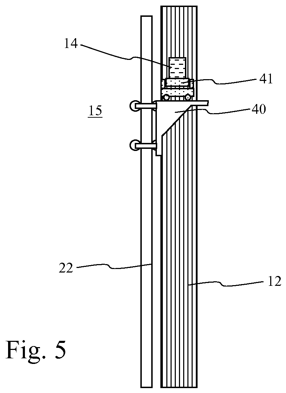

Tel qu'illustré sur la figure 5, le porte outil **15** comporte un chariot **41** monté sur une table **40.** Le chariot **40** supporte les différents outils **14** et déplace les différents outils **14** au plus près de l'assemblage **12.** Pour ce faire, le chariot **40** est susceptible d'être déplacé sur une surface de la table **40** selon deux directions orthonormées. Lorsque le chariot **40** est déplacé en direction de l'assemblage **12**, une mesure de résistance de déplacement est effectuée afin de stopper les déplacements du chariot **40** si un effort résistant dépasse un seuil prédéterminé.

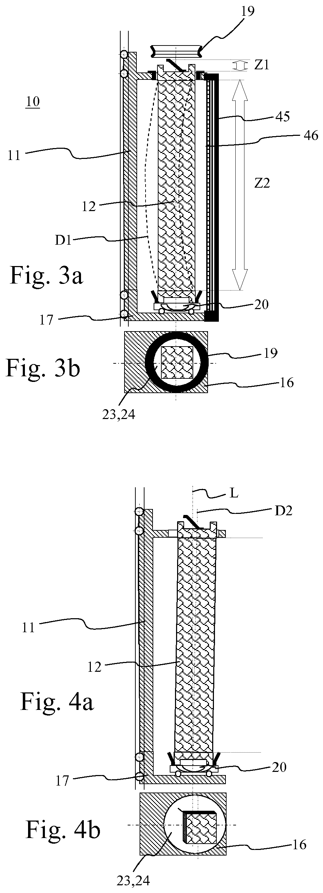

Les figures 3 et 4 illustrent deux inspections distinctes de l'assemblage **12** par un outil **14.** Dans le mode de réalisation des figures 3a et 3b, la déformation **D1** de type « banane »,en S ou tout autre est recherchée sur l'assemblage **12**.. Pour mesurer cette déformation **D1**, l'assemblage **12** est monté sur un support de pied **20** mobile en rotation par rapport au plateau **17.** La partie supérieure de l'assemblage **12** est également montée dans l'ouverture **23** du bras de support **16** par un support de tête **19,** de sorte à permettre la rotation de l'assemblage **12** par rapport au bras de support **16.** Un outil **14** ou toute autre camera relève la position et permet l'inspection de l'assemblage **12** sur la zone **Z1** située au-dessus du bras de support **16** et sur la zone **Z2** située entre le bras de support **16** et le plateau **17.** Lors de la mesure de la position et de l'inspection de l'assemblage **12,** celui-ci est déplacé en rotation depuis le support de pied **20,** afin de visualiser les quatre faces de l'assemblage **12.**

La mesure de la rectitude de l'assemblage **12** peut être effectuée en présence d'un référentiel monté sur la nacelle **11.** Dans l'exemple de la figure 3a, le référentiel est constitué d'un support **45** monté entre le plateau **17** et le bras de support **16,** et configuré pour tendre un fil **46** à la verticale. La mesure de la position de l'assemblage **12** est alors effectuée en calculant la distance entre l'assemblage **12** et le fil **46**.

Dans le mode de réalisation des figures 4a et 4b, une déformation **D2** de type « tour de pise » ou « déport pied/tête » est recherchée sur l'assemblage **12.** Cette déformation **D2** correspond à un déport entre les extrémités inférieure et supérieure de l'assemblage **12** lorsque le combustible est posé sur son embout inférieur et non pas suspendu comme cela est réalisé habituellement. Pour mesurer cette déformation **D2** par rapport à l'axe longitudinal **L**, l'assemblage **12** est monté sur un support de pied **20** mobile en rotation par rapport au plateau **17.** La partie supérieure de l'assemblage **12** est montée libre dans l'ouverture **23** du bras de support **16** de sorte à former un espacement **24** entre l'assemblage **12** et le bras de support **16.** L'assemblage **12** peut alors se déporter sans buter contre une paroi interne de l'ouverture **23** du bras de support **16.** Dans cette configuration, un outil **14** relève la position de l'assemblage **12** afin d'estimer la déformation **D2** de l'assemblage **12.** L'ouverture **23** du bras est suffisamment grande pour éviter le contact entre le combustible et le support (plusieurs centimètres).

L'invention permet ainsi de simplifier et d'augmenter le nombre de mesures possibles sur un assemblage **12** combustible nucléaire. Les mesures peuvent également être effectuées sans remonter l'assemblage **12** et sans utiliser un stand de mesure encombrant la piscine **30.**

## Revendications

1. Dispositif d'intervention (10) sur un assemblage (12) combustible nucléaire au sein d'une piscine de réacteur nucléaire, ledit dispositif comportant :
- une nacelle (11) configurée pour maintenir et déplacer un assemblage (12) combustible nucléaire sur toute la hauteur de la piscine, et
- au moins un outil (14) configuré pour mesurer un paramètre dudit assemblage (12) combustible nucléaire maintenu par ladite nacelle (11), ledit au moins un outil (14) étant monté dans un porte outil (15) configuré pour maintenir et déplacer ledit au moins un outil (14) sur toute la hauteur de la piscine indépendamment de ladite nacelle (11),
***caractérisé* en ce que** la nacelle (11) comporte un bras de support (16) disposé dans une partie supérieure de cette dernière et un plateau (17) formant une extrémité inférieure de ladite nacelle (11), et **en ce que** la nacelle (11) est configurée pour maintenir un assemblage (12) combustible nucléaire en appui sur ledit plateau (17) et **en ce qu'**elle est entourée par une ouverture (23) dudit bras de support (16).

2. Dispositif d'intervention selon la revendication 1, dans lequel le dispositif d'intervention (10) comporte une alvéole (18) pénétrant dans l'ouverture (23) du bras de support (16), ladite alvéole (18) étant configurée pour recevoir un assemblage (12) combustible nucléaire avec ledit bras de support (16) lors d'un déplacement dudit assemblage (12) combustible nucléaire par la nacelle (11).

3. Dispositif d'intervention selon la revendication 1, dans lequel le dispositif d'intervention (10) comporte un espacement (24) entre l'ouverture (23) du bras de support (16) et un assemblage (12) combustible nucléaire.

4. Dispositif d'intervention selon la revendication 1, dans lequel le dispositif d'intervention (10) comporte un support de tête (19) pénétrant dans l'ouverture (23) du bras de support (16), ledit support de tête (19) étant configuré pour monter un assemblage (12) combustible nucléaire libre en rotation par rapport au bras de support (16).

5. Dispositif d'intervention selon l'une des revendications 3 et 4, dans lequel le dispositif d'intervention (10) comporte un support de pied (20) mobile en rotation par rapport au plateau (17).

6. Dispositif d'intervention selon l'une des revendications 1 à 5, dans lequel le bras de support (16) et le plateau (17) sont configurés pour établir une distance comprise supérieure à 15 centimètres entre un corps longitudinal (25) de la nacelle (11) et un assemblage (12) combustible nucléaire monté dans ladite nacelle (11).

7. Dispositif d'intervention selon l'une des revendications 1 à 6, dans lequel le porte outil (15) comporte un chariot (41) destiné à supporter ledit au moins un outil (14), ledit chariot (41) étant monté sur une table (40), ledit chariot (41) étant configuré pour se déplacer selon deux directions orthonormées sur une surface de ladite table (40).

8. Dispositif d'intervention selon la revendication 7, dans lequel le chariot (41) comporte des moyens de détection d'une résistance de son déplacement, configurés pour détecter si un effort résistant dépasse un seuil prédéterminé.

9. Dispositif d'intervention selon l'une des revendications 1 à 8, dans lequel la nacelle (11) est montée sur un premier guide (21) et dans lequel le porte outil (15) est monté sur une second guide (22).

## Patentansprüche

1. Arbeitsvorrichtung (10) für eine Kernbrennstoffbaugruppe (12) innerhalb eines Kernreaktorbeckens, wobei die Vorrichtung aufweist:
- eine Gondel (11), konfiguriert zum Halten und Bewegen einer Kernbrennstoffbaugruppe (12), über die gesamte Höhe des Beckens hinweg, und
- wenigstens ein Werkzeug (14), konfiguriert zum Messen eines Parameters der von dieser Gondel (11) gehaltenen Kernbrennstoffbaugruppe (12), wobei das wenigstens eine Werkzeug (14) in einem Werkzeughalter (15) montiert ist, der dazu konfiguriert ist, dieses wenigstens eine Werkzeug (14) unabhängig von der Gondel (11) über die gesamte Höhe des Beckens zu halten und zu bewegen,
***dadurch gekennzeichnet, dass*** die Gondel (11) einen Tragarm (16) umfasst, angeordnet in einem ihrer oberen Teile sowie eine Platte (17), die ein unteres Ende der Gondel (11) bildet, und ***dadurch, dass*** die Gondel (11) zum Halten der Kernbrennstoffbaugruppe (12) in Auflage auf dieser Platte (17) konfiguriert ist und ***dass*** sie von einer Öffnung (23) des Tragarms (16) umgeben ist.

2. Arbeitsvorrichtung gemäß Anspruch 1, bei der die Arbeitsvorrichtung (10) eine Zelle (18) umfasst, die in die Öffnung (23) des Tragarms (16) hineinreicht, diese Zelle (18) ist dazu konfiguriert, eine Kernbrennstoffbaugruppe (12) mit diesem Tragarm (16) aufzunehmen, wenn diese Kernbrennstoffbaugruppe (12) mittels der Gondel (11) verlagert wird.

3. Arbeitsvorrichtung gemäß Anspruch 1, bei der die Arbeitsvorrichtung (10) einen Abstand (24) zwischen der Öffnung (23) des Tragarms (16) und einer Kernbrennstoffbaugruppe (12) enthält.

4. Arbeitsvorrichtung gemäß Anspruch 1, bei der die Arbeitsvorrichtung (10) einen Lagerblock (19) umfasst, der in die Öffnung (23) des Tragarms (16) reicht, dieser Lagerblock (19) ist dazu konfiguriert, eine Kernbrennstoffbaugruppe (12) bezogen auf den Tragarm (16) frei drehbar zu montieren.

5. Arbeitsvorrichtung gemäß einem der Ansprüche 3 und 4, bei der die Arbeitsvorrichtung (10) einen Fußhalter (20) umfasst, der bezogen auf die Platte (17) frei drehbar ist.

6. Arbeitsvorrichtung gemäß einem der Ansprüche 1 bis 5, bei der der Tragarm (16) und die Platte (17) dazu konfiguriert sind, eine Entfernung von mehr als 15 Zentimetern zwischen einem Längskörper (25) der Gondel (11) und der in der Gondel (11) montierten Kernbrennstoffbaugruppe (12) herzustellen.

7. Arbeitsvorrichtung gemäß einem der Ansprüche 1 bis 6, bei der der Werkzeughalter (15) einen Schlitten (41) umfasst, um dieses wenigstens eine Werkzeug (14) zu tragen, dieser Schlitten (41) ist auf einem Tisch (40) montiert und dieser Schlitten (41) ist dazu konfiguriert, sich in zwei orthonormierte Richtungen auf einer Fläche dieses Tischs (40) verschieben zu lassen.

8. Arbeitsvorrichtung gemäß Anspruch 7, bei der der Schlitten (41) Vorrichtungen zur Erkennung eines Widerstands gegen seine Verschiebung zu erkennen, dazu konfiguriert festzustellen, ob eine Widerstandskraft einen vorher festgelegten Schwellenwert übersteigt.

9. Arbeitsvorrichtung gemäß einem der Ansprüche 1 bis 8, bei der die Gondel (11) auf einer ersten Führung (21) montiert ist und bei der der Werkzeughalter (15) auf einer zweiten Führung (22) montiert ist.

## Claims

1. Intervention device (10) for nuclear fuel assembly (12) within a nuclear reactor pool, with the said device incorporating:
- a pod (11) configured to hold and move a nuclear fuel assembly (12) over the entire height of the pool, and
- at least one tool (14) configured to measure a parameter of the said nuclear fuel assembly (12) held by the said pod (11), with the said at-least-one tool (14) being mounted in a tool holder (15) configured to hold and move the said at-least-one tool (14) over the entire height of the pool independently of the said pod (11),
**characterized in that** the pod (11) incorporates a mounting arm (16) positioned on an upper part of the latter, and a plate (17) forming a lower extremity of the said pod (11), and **in that** the pod (11) is configured to hold a nuclear fuel assembly (12) pressed against the said plate (17), and **in that** it is surrounded by an opening (23) in the said mounting arm (16).

2. Intervention device in accordance with claim 1, in which the intervention device (10) incorporates a cell (18) penetrating into the opening (23) of the mounting arm (16), with the said cell (18) being configured to accommodate a nuclear fuel assembly (12) with the said mounting arm (16) during a movement of the said nuclear fuel assembly by the pod (11).

3. Intervention device in accordance with claim 1, in which the intervention device (10) incorporates a space (24) between the opening (23) in the mounting arm (16) and a nuclear fuel assembly (12).

4. Intervention device in accordance with claim 1, in which the intervention device (10) incorporates a head mounting (19) penetrating into the opening (23) in the mounting arm (16), with the said head mounting (19) being configured to mount a nuclear fuel assembly (12) rotating freely in relation to the mounting arm (16).

5. Intervention device in accordance with one of claims 3 and 4, in which the intervention device (10) incorporates a foot mounting (20) that can rotate in relation to the plate (17).

6. Intervention device in accordance with one of claims 1 to 5, in which the mounting arm (16) and the plate (17) are configured to establish a distance greater than 15 centimeters between a longitudinal body (25) of the pod (11) and a nuclear fuel assembly (12) mounted in the said pod (11).

7. Intervention device in accordance with one of claims 1 to 6, in which the tool holder (15) incorporates a carriage (41) designed to support the said at-least-one tool (14), with the said carriage (41) being mounted on a table (40), and with the said carriage (41) being configured to move in two orthonormal directions on a surface of the said table (40).

8. Intervention device in accordance with claim 7, in which the carriage (41) incorporates means of detection of a resistance to its movement, configured to detect whether a resistant force exceeds a previously-determined threshold.

9. Intervention device in accordance with one of claims 1 to 8, in which the pod (11) is mounted on a first guide (21), and in which the tool holder (15) is mounted on a second guide (22).
